# EUROPÄISCHE PATENTANMELDUNG

(11) **EP 0 910 018 A2**
(43) Veröffentlichungstag der Anmeldung: **21.04.1999**
(21) Anmeldenummer: 98440215.6
(22) Anmeldetag: 02.10.1998
(51) Int. Cl.: G06F 11/00

(54) **Verfahren zur Fehlerprüfung von echtzeitfähiger Systemsoftware**

(30) Priorität: 15.10.1997 DE 19745438
(71) Anmelder: ALCATEL, 75088 Paris (FR)
(72) Erfinder: Warlitz, Joachim Dr., 70499 Stuttgart (DE); Fitzke, André, 70806 Kornwestheim (DE); Veider, Alfred, 1120 Wien (AT); Preisinger, Kurt, 1060 Wien (AT)
(74) Vertreter: Rausch, Gabriele, Dr.

(57) **Zusammenfassung**

Bei sicherheitskritischen Anwendungen, etwa in der Eisenbahnsignaltechnik, werden an die Systemsoftware (= Betriebssystemkernel + systemnahe Softwarekomponenten) der verwendeten Datenverarbeitungsanlagen sehr hohe Anforderungen an die Fehlerfreiheit gestellt. Die Systemsoftware muß daher so gründlich wie möglich auf Fehler geprüft werden. Erfindungsgemäß werden Prüfprozesse (PP1...PPm) im Wechsel mit Applikationsprozessen (AP1...APn) ausgeführt. Durch diese Prüfung im laufenden Betrieb des Systems wird eine höhere Sicherheit erzielt, da dadurch auch das reale (Langzeit-)Verhalten des Gesamtsystems überprüft wird.

Um Aussagen über die Richtigkeit der Prüfergebnisse machen zu können, wird die Prüfung vorzugsweise diversitär durchgeführt. Diversität kann erzielt werden durch:
- Verwendung einer zweiten, unterschiedlichen Datenverarbeitungsanlage, auf der identische Prüfprozesse durchgeführt werden (Hardware-Diversität);
- Wiederholung des Prüfprozesses zu einem Zeitpunkt, in dem sich der Applikationsprozeß in einem anderem Zustand befindet (Zustands-Diversität);
- quasi-gleichzeitige Durchführung von unterschiedlich programmierten Prüfprozessen, die die gleiche Funktion der Systemsoftware prüfen (Software-Diversität)

## Beschreibung

Die Erfindung betrifft ein Verfahren zur Fehlerprüfung von echtzeitfähiger Systemsoftware nach dem Oberbegriff des Anspruchs 1, eine Datenverarbeitungsanlage nach dem Oberbegriff des Anspruchs 7 sowie ein Programmodul für eine Datenverarbeitungsanlage nach dem Oberbegriff des Anspruchs 10.

Zur Steuerung und Überwachung sicherheitskritischer Systeme, etwa im Bereich der Eisenbahnsignaltechnik oder der Luft- und Weltraumfahrt, werden in der Regel echtzeitfähige Datenverarbeitungsanlagen eingesetzt. Eine Datenverarbeitungsanlage - dabei kann es sich um einen einzelnen Rechner oder auch um ein Mehrrechnersystem handeln - wird als echtzeitfähig bezeichnet, wenn feste Antwortzeiten garantieren werden können. Dies bedeutet, daß die Zeit zwischen der Eingabe von Daten und der Ausgabe des zugehörigen Ergebnisses bei fehlerfreiem Betrieb einen festen Wert unter keinen Umständen überschreitet.

Die Echtzeitfähigkeit und die Sicherheitsverantwortung derartiger Datenverarbeitungsanlagen stellen hohe Anforderungen an die verwendete Hardware, vor allem jedoch an die eingesetzte Systemsoftware. Dies hat u. a. zur Folge, daß für diese Anwendungen vorgesehene Systemsoftware besonders zuverlässig auf mögliche Fehler zu überprüfen ist. Der Begriff Systemsysoftware wird im folgenden als Oberbegriff für den Betriebssystem-Kernel und andere systemnahe Softwarekomponenten (z. B. Schnittstellentreiber oder Server für Queues, Timer usw.) verwendet.

Aus einem Aufsatz von M. A. Tsoukarellas et al. mit dem Titel "Systematically Testing a Real-Time Operating System", IEEE Micro, vol. 15, nr. 5, p. 50-60, Oct. 1995, ist ein Verfahren zum Testen von echtzeitfähigen Betriebssytemen bekannt. Bei diesem Verfahren werden zunächst einzelne Funktionen, anschließend aus diesen Funktionen zusammengesetzte Module und schließlich das aus den Modulen bestehende Gesamtprogramm getestet. Zur Anwendung kommen dort sowohl sog. "black-box"- als auch "white-box"-Tests. Dort wird ferner beschrieben, daß zum Testen ein zusätzlicher Rechner verwendet wird, der für den Rechner mit dem eigentlich zu testenden Betriebssytem die Außenwelt (Prozeßparameter ect.) simuliert.

Eine der charakteristischen Eigenschaften von echtzeitfähiger Systemsoftware ist es, daß es Typen von Fehlern gibt, die nur in bestimmten komplexen Betriebszuständen auftreten. Der bei dem bekannten Testverfahren eingesetzte Rechner, der die Außenwelt simulieren soll, ist im Regelfall nicht in der Lage, diese komplexen Betriebszustände zu reproduzieren. Es ist daher Aufgabe der Erfindung, die Fehlerprüfung von echtzeifähiger Systemsoftware zuverlässiger zu machen.

Die Aufgabe wird gelöst durch ein Verfahen nach Anspruch 1, eine Datenverarbeitungsanlage nach Anspruch 7 und ein Programmodul nach Anspruch 10. Erfindungsgemäß werden Applikationsprozesse im Wechsel mit Prüfprozessen von der Datenverarbeitungsanlage ausgeführt. Damit wird erreicht, daß auch während des regulären Betriebs ("Feldeinsatz") der Datenverarbeitungsanlage eine Fehlerprüfung der Systemsoftware stattfindet. Da sich die Datenverarbeitungsanlage während des Feldeinsatzes in den verschiedensten Betriebszuständen befindet, lassen sich durch das erfindungsgemäße Verfahren Fehler wesentlich zuverlässiger entdecken als dies bei Verfahren der Fall ist, die von einer künstlich geschaffenen Testumgebung ausgehen. Ein weiterer bedeutender Vorteil besteht darin, daß auch solche Fehler aufspürbar sind, die sich erst nach längerer Betriebsdauer einstellen. So sind beispielsweise Fehler bei der Zuweisung von Speicherplatz bekannt geworden, die sich erst nach einem Dauerbetrieb von vielen Tagen, Wochen oder gar Monaten bemerkbar machen. Derartige Fehler lassen sich mit Hilfe des erfindungsgemäßen Verfahrens aufspüren, während bekannte, vor dem Feldeinsatz durchgeführte Tests in aller Regel nur Fehler entdecken können, die unmittelbar nach Betriebsaufnahme in Erscheinung treten.

Bei einer vorteilhaften Ausführung des Verfahrens nach Anspruch 2 werden die Prüfprozesse während des Feldeinsatzes diversitär durchgeführt. Hierfür sind verschiedene Varianten vorgesehen, die Gegenstand der Ansprüche 3 bis 5 sind. Aufgrund der Diversität kann die Zuverlässigkeit der Fehlerprüfung weiter verbessert werden, da ein Vergleich der Prüfergebnisse von wenigstens zwei Prüfprozessen durchgeführt wird.

Die Erfindung wird nachfolgend anhand der Ausführungsbeispiele und der Zeichnungen eingehend erläutert. Es zeigen:
- Fig. 1:: Schematische Darstellung des Schichtenmodells eines Rechners R zur Erläuterung des erfindungsgemäßen Verfahrens,
- Fig. 2:: Vereinfachte Darstellung zur Erläuterung, wie Applikations- und Prüfprozessen von einem Scheduler Zeitschlitze zugeordnet werden können,
- Fig. 3:: Eine Fig. 1 entsprechende Darstellung eines Rechners, der zusätzlich Prüfprozeßsteuerungsmittel PPSM umfaßt,
- Fig. 4:: Schematische Darstellung zweier Rechner R1 und R2 zur Erläuterung des Ausführungsbeispiels nach Anspruch 3,
- Fig. 5:: Zuordnung von Zeitschlitzen zu Applikations- und Prüfprozessen nach einem Ausführungsbeispiel gemäß Anspruch 4,
- Fig. 6:: Zuordnung von Zeitschlitzen zu Applikations- und Prüfprozessen nach einem Ausführungsbeispiel gemäß Anspruch 5.

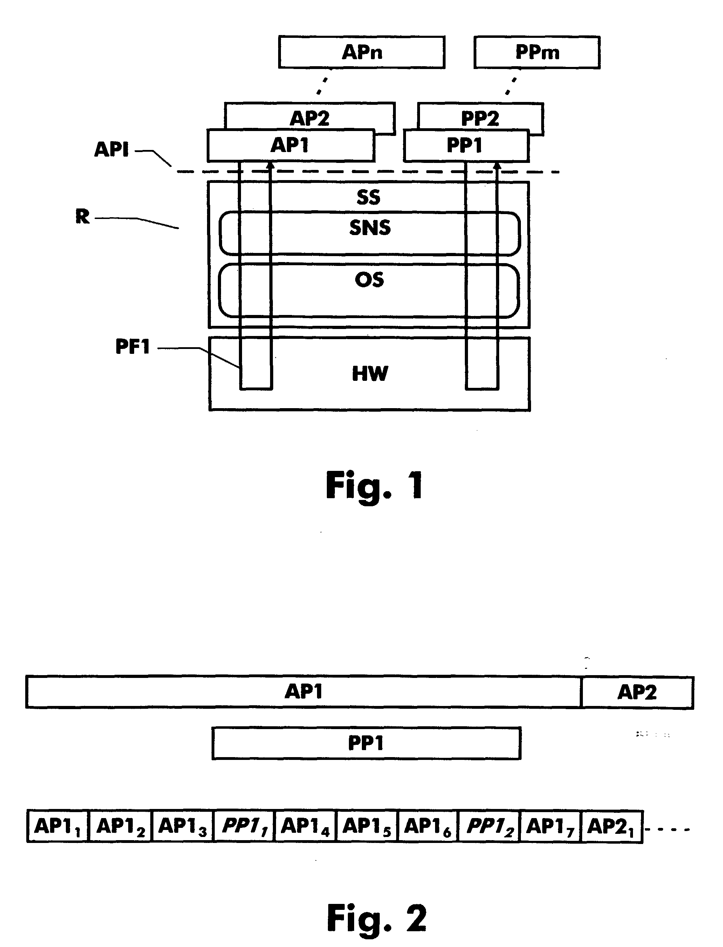

Fig. 1 zeigt schematisch ein Schichtenmodell eines Rechners R zur Erläuterung des erfindungsgemäßen Verfahrens. Auf einer Hardwareschicht HW setzt die Systemsoftware SS auf, die den Betriebssystem-Kernel OS im engeren Sinne sowie weitere systemnahe Software SNS umfaßt. Die Systemsoftware SS kommuniziert mit darüberliegenden Applikationsprozessen AP1...APn. Applikationsprozesse sind Programme oder Teile von Programmen, die in sich abgeschlossene Einheiten darstellen. Insbesondere kann ein einzelner Applikationsprozeß über den gesamten ihm zugewiesenen Speicherbereich des jeweiligen Rechners eigenständig verfügen. Der Datenaustausch zwischen der Systemsoftware SS und den Applikationsprozessen kann gegebenenfalls über eine Programmierschnittstelle API erfolgen, worauf unten näher eingegangen werden wird.

Durch den Pfeil PF1 ist angedeutet, daß bei der Ausführung von Applikationsprozessen sowohl die Systemsoftware SS als auch die Hardwareschicht HW beteiligt ist. So wird etwa bei einem Funktionsaufruf durch einen Applikationsprozeß zunächst von der Systemsoftware SS ein von der Hardwareschicht lesbarer Befehl erzeugt und dieser dann von der Hardwareschicht ausgeführt. Das von der Hardwareschicht ermittelte Ergebnis wird anschließend von der Systemsoftware SS in eine Form zurückverwandelt, die vom Applikationsprozeß verstanden wird.

Erfindungsgemäß ist nun vorgesehen, neben den Applikationsprozessen AP1...APn noch weitere Prozesse auszuführen, die als Prüfprozesse PP1...PPm bezeichnet werden. Die Prüfprozesse werden im Wechsel mit den Applikationsprozessen AP1...APn ausgeführt und haben die Aufgabe, Fehler in den darunterliegenden Schichten aufzuspüren, Bei der Ausführung der Prüfprozesse sind - wie auch bei den Applikationsprozessen - alle darunterliegenden Schichten beteiligt. Wenn ein Fehler festgestellt wird, so ist es daher zunächst nicht möglich, diesen der Hardwareschicht HW oder der Systemsoftware SS zuzuordnen. Wenn jedoch zusätzlich auf der Ebene der Systemsoftware eine Prüfung der darunterliegenden Hardwareschicht stattfindet, so können - sofern die Hardwareschicht HW fehlerfrei ist - von den Prüfprozessen PP1...PPm entdeckte Fehler zuverlässig der Systemsoftware SS zugeordnet werden. Von der Systemsoftware gesteuerte Verfahren zur Prüfung der Hardwareschicht sind dem Fachmann bekannt, ohne daß es hierfür eines weiteren Nachweises bedarf.

Die Prüfprozesse PP1...PPm unterscheiden sich grundsätzlich nicht von solchen Prüfprozessen, die nach herkömmlicher Art vor dem Feldeinsatz "im Labor" durchgeführt werden, um die Systemsoftware zu überprüfen. Es wird daher darauf verzichtet, einzelne Prüfprozesse eingehend zu erläutern. Eine Übersicht über mögliche Prüfprozesse findet sich in einer Testsuite des *National Institute of Standards and Technology* mit dem Titel: "NIST-PCTS:151-2", NIST POSIX Certification Authority, National Institute of Standards and Technology, Computer Systems Laboratory, Gaitherburg, MD 20899. Dort sind Prüfprozesse aufgeführt, die durch mehrere Testfälle Funktionen folgender Funktionsgruppen auf ihre Richtigkeit hin überprüfen: *Process Primitives, Process Environments, Files and Directories, Input and Output Primitives, Message Queues, Clocks and Timers sowie Pthreads.*

Der Wechsels zwischen Applikations- und Prüfprozessen kann auf verschiedene Weisen erfolgen. So kann z. B. vorgesehen sein, daß der Rechner R immer im Wechsel einen vollständigen Applikationsprozeß und einen vollständigen Prüfprozeß ausführt. Je nach Umfang der Prüfprozesse kann dadurch jedoch die Abarbeitung der Applikationsprozesse für längere Zeit unterbrochen werden, was bei echtzeitfähigen Systemen u. U. nicht tolerierbar ist. Daher wird vorzugsweise vom bei Echtzeitanwendungen üblichen Zeitschranken-Scheduling Gebrauch gemacht. Beim Zeitschranken-Scheduling werden den einzelnen Prozessen Zeitschranken für die Abarbeitung vorgegeben. Auf das erfindungsgemäße Verfahren angewandt bedeutet dies, daß den Prüfprozessen Zeitschlitze fester Länge zugeordnet werden. Nur innerhalb dieser Zeitschlitze stehen die Systemresourcen (Prozessorleistung, Speicher etc.) den Prüfprozessen zur Verfügung; während der restlichen Zeit werden Applikationsprozesse abgearbeitet.

Eine mögliche Zuordnung der Zeitschlitze zu Applikations- und Prüfprozessen zeigt Fig. 2. Die Zeitschlitze haben in diesem Beispiel eine Länge von jeweils 1 ms. Ein Scheduler stellt jeden vierten Zeitschlitz Prüfprozessen zur Verfügung, während die übrigen Zeitschlitze der Ausführung von Applikationsprozessen vorbehalten sind. Im dargestellten Beispiel wird ein Applikationsprozeß AP1 in 7 Teilprozesse AP1₁...AP1₇ unterteilt, die der Reihe nach abgearbeitet werden. Dazwischen werden Teilprozesse PP1₁ und PP1₂ eines Prüfprozesses abgearbeitet. Nach beendeter Ausführung des Applikationsprozesses AP1 wird mit dem ersten Teilprozeß AP2₁ des nächsten Applikationsprozesses AP2 begonnen usw.

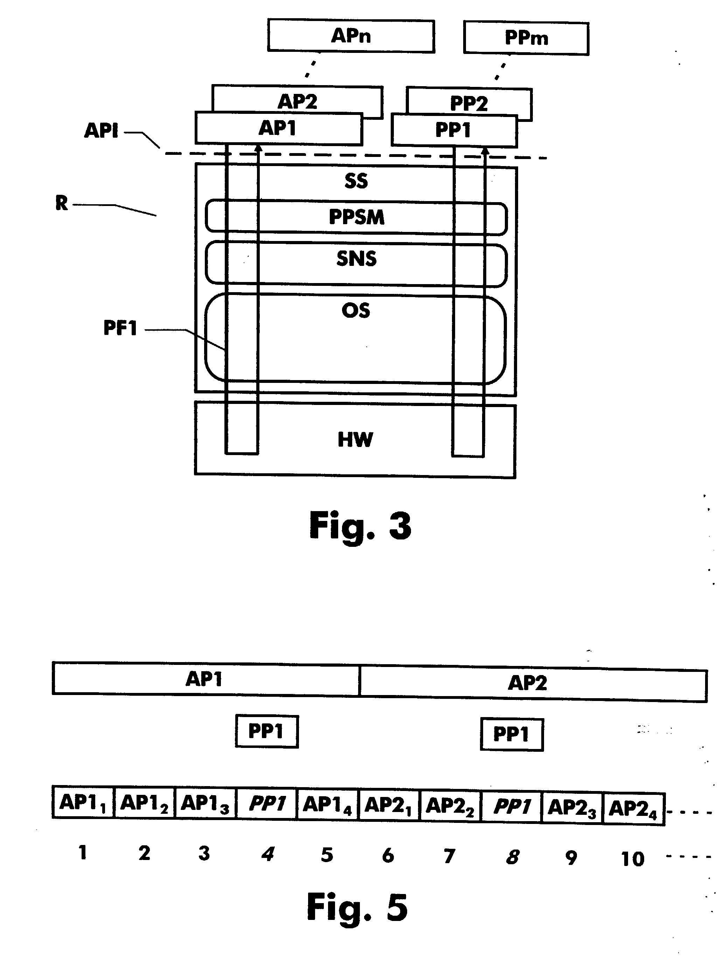

Zur Steuerung des Wechsels zwischen Applikations- und Prüfprozessen kann ein zusätzliches Prüfprozeßsteuerungsmodul PPSM verwendet werden. Das Prüfprozeßsteuerungsmodul PPSM gehört, wie dies in Fig. 3 erkennbar ist, zur Systemsoftware und kann auf Funktionen zugreifen, die von systemnahen Softwarekomponenten SNS bereitgestellt werden. Dem Prüfprozeßsteuerungsmodul PPSM obliegt die Aufgabe, die Reihenfolge und Priorität der Prüfprozesse festzulegen. So ist etwa denkbar, daß die Prüfprozesse während der vom Scheduler zugewiesenen Rechenzeit in fester Reihenfolge nacheinander ausgeführt werden. Ebenso jedoch könnte die Ausführung eines bestimmten Prüfprozesses abhängig gemacht werden vom Vorliegen eines bestimmten Systemkontextes. So ist es beispielsweise möglich, daß die Applikationsprozesse selbst den Aufruf bestimmter Prüfprozesse veranlassen.

Bei einem Ausführungsbeispiel der Erfindung nach Anspruch 2 werden die Prüfprozesse diversitär ausgeführt. In diesem Zusammenhang bedeutet Diversität, daß jeder Prüfprozeß wenigstens zweimal unabhängig voneinander ausgeführt wird. Durch die diverse Ausführung der Prüfprozesse wird die Zuverlässigkeit der Fehlerprüfung weiter erhöht. Dabei wird angenommen, daß bei einem Fehler in der Systemsoftware die Ergebnisse der Prüfprozesse aufgrund der Diversität voneinander abweichen. Folglich ist bei diverser Ausführung von Prüfprozessen dafür zu sorgen, daß die Ergebnisse der entsprechenden Prüfprozesse miteinander verglichen werden. Nachfolgend werden verschiedene Möglichkeiten erläutert, wie diese Diversität erzielbar ist.

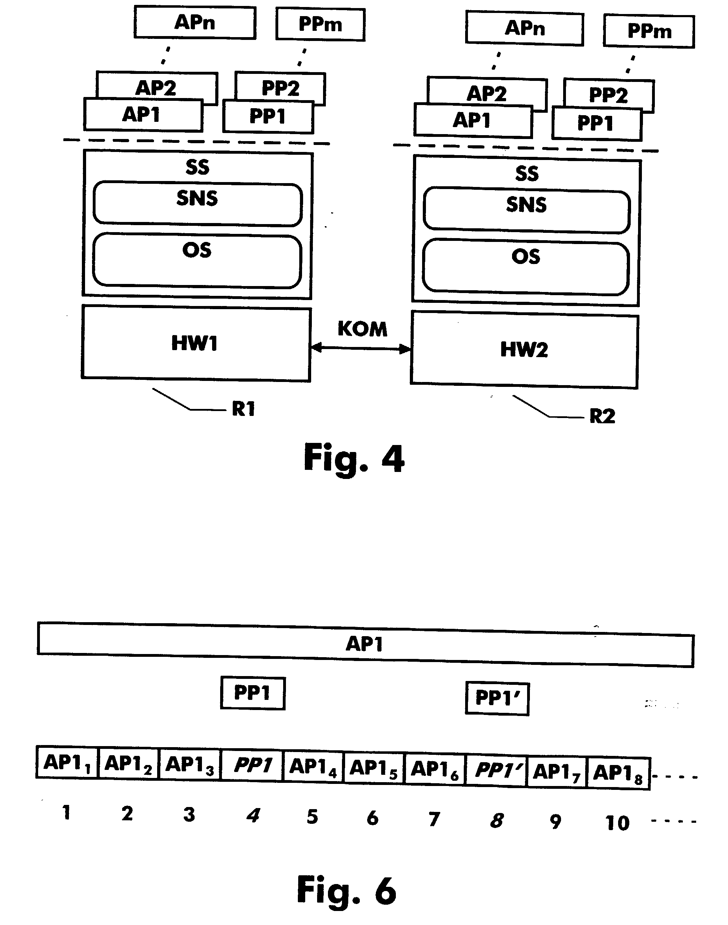

Fig. 4 zeigt schematisch einen Rechner R1 sowie einen zweiten Rechner R2. Der Übersicht halber ist der Datenfluß innerhalb der Rechner nicht dargestellt. Die beiden Rechner R1 und R2 haben die gleiche Systemsoftware SS; gleich sind auch die von den Rechnern ausgeführten Applikations- und Prüfprozesse AP1...APn bzw. PP1...PPm. Die Rechner haben lediglich eine Hardware HW1 und HW2, die sich möglichst deutlich voneinander unterscheidet (z. B. unterschiedlicher Prozessortypen). Man könnte daher diese Art der Diversität als "Hardware-Diversität" bezeichnen. Sie ist besonders geeignet, das Zusammenwirken der Systemsoftware mit der Hardwareschicht zu überprüfen. Die Ergebnisse der Prüfprozesse werden zwischen den Rechnern über eine Kommunikationsverbindung KOM ausgetauscht. Auf diese Weise kann jeder Rechner erkennen, ob ein Prüfprozeß PPi auf beiden Rechnern zu übereinstimmenden Ergebnissen geführt hat. Unterscheiden sich die Ergebnisse, so muß ein Fehler vorliegen. Eine zuverlässige Fehlerlokalisation ist auf diese Weise nicht möglich, doch kann bei sorgfältiger Prüfung der verwendeten Hardware vermutet werden, daß der Fehler im Zusammenwirken zwischen Hardware und Systemsoftware zu suchen ist.

Eine andere Möglichkeit, Prüfprozesse divers auszuführen, besteht darin, einen bestimmten Prüfprozeß zu wiederholen und die Ergebnisse der Prüfungen miteinander zu vergleichen. Vorausgesetzt wird dabei, daß sich der Rechner zum Zeitpunkt der Wiederholung in einem anderen Zustand befindet als zum Zeitpunkt der erstmaligen Durchführung. Diese Art von Diversität könnte man als "Zustands-Diversität" bezeichnen. Im allgemeinen nimmt der Rechner während der Abarbeitung von Applikationsprozessen laufend andere Zustände ein, da sich etwa die Speicherbelegung während der Abarbeitung fortwährend ändert. Demnach würde es bereits ausreichen, einen Prüfprozeß in kurzem zeitlichen Abstand zu wiederholen. Es gibt jedoch auch Applikationsprozesse, bei denen sich der Zustand des Rechners über einen längeren Zeitraum hinweg nicht ändert. Daher ist es vorzuziehen, den Prüfprozeß erst dann zu wiederholen, wenn der Rechner einen anderen Applikationsprozeß gerade bearbeitet oder bearbeitet hat. Es ist dann sehr viel wahrscheinlicher, daß sich der Rechner in einem anderen Zustand befindet.

Dies sei anhand der Fig. 5 noch einmal erläutert. Fig. 5 zeigt eine Zuordnung von Applikations- und Prüfprozessen zu Zeitschlitzen ähnlich wie in Fig. 2. Der Einfachheit halber sei angenommen, daß der Prüfprozeß PP1 lediglich einen Zeitschlitz zur Ausführung benötige. Der Prüfprozeß PP1 wird zunächst während der Ausführung des Applikationsprozesses AP1 ausgeführt. Dies ist in Fig. 5 daran erkennbar, daß vor bzw. nach dem mit PP1 gekennzeichneten Zeitschlitz 4 die zum Applikationsprozeß AP1 gehörenden Teilprozesse AP1₃ und AP1₄ ablaufen. Bei der wiederholten Ausführung des Prüfprozesses PP1 befindet sich der Rechner bereits in einem anderen Zustand, da er nun den Applikationsprozeß AP2 ausführt. Dies ist daran erkennbar, daß vor bzw. nach dem mit PP1 gekennzeichneten Zeitschlitz 8 die zum Applikationsprozeß AP2 gehörenden Teilprozesse AP2₂ und AP2₃ ablaufen.

Eine weitere Möglichkeit zur diversen Ausführung von Prüfprozessen besteht darin, zeitgleich oder annähernd zeitgleich neben einem bestimmten Prüfprozeß PPi einen weiteren Prüfprozeß PPi' auszuführen. Der weitere Prüfprozeß PPi' überprüft die gleiche Funktion der Systemsoftware wie der Prüfprozeß PPi, ist jedoch divers zum Prüfprozeß PPi programmiert. Diese Art der Diversität sei nachfolgend "Software-Diversität" genannt. Mit dieser Art von Diversität lassen sich u. U. auch solche Fehler in der Systemsoftware erkennen, die aufrund einer fehlerhaften Programmierung des entsprechenden Prüfprozesses unentdeckt blieben.

Zur Erläuterung zeigt Fig. 6 eine Zuordnung von Applikations- und Prüfprozessen zu Zeitschlitzen ähnlich wie in den Fig. 2 und 5. Der Prüfprozeß PP1 und der dazu divers programmierte Prüfprozeß PP1' werden hier in zwei aufeinanderfolgenden, für die Ausführung von Prüfprozessen reservierten Zeitschlitzen 4 bzw. 8 ausgeführt. Es sei auch hier der Einfachheit halber angenommen, daß zur Ausführung der beiden Prüfprozesse nur jeweils ein Zeitschlitz benötigt wird. Quasi-gleichzeitig dazu wird der Applikationsprozeß AP1 in den übrigen Zeitschlitzen 1-3, 5-7, 10... ausgeführt.

Vorzugsweise werden die oben erläuterten Möglichkeiten, eine Diversität zu erzielen, miteinander kombiniert. So ist es beispielsweise möglich, einen zu einem ersten Prüfprozeß PP1 divers programmierten Prüfprozeß PP1' auf einem zweiten Rechner auszuführen, der eine unterschiedliche Hardware hat und auf dem unterschiedliche Applikationsprozesse ausgeführt werden. Eine solches Vorgehen macht von der Hardware-Diversität, der Zustands-Diversität und der Software-Diversität Gebrauch.

Die von den Prüfprozessen zu prüfenden Funktionen der Systemsoftware kann auf solche Funktionen beschränk werden, die nicht vor dem Feldeinsatz der Datenverarbeitungsanlage in ausreichender Tiefe prüfbar sind. Beispiele hierfür wären etwa Funktionen für Timer, Verwaltung von Massage-Queues oder Mechanismen der Ein- und Ausgabe. Dies ist dann sinnvoll, wenn aufgrund knapper Systemresourcen die Ausführung von Applikationsprozessen möglichst wenig durch die zusätzliche Ausführung von Prüfprozessen beeinträchtigt werden soll.

Vorzugsweise kommunizieren die Applikations- und die Prüfprozesse mit der Systemsoftware über eine definierte echtzeitfähige Programmierschnittstelle. Derartige Programmierschnittstellen stellen darauf aufbauenden Prozessen einen normierten Satz von über definierte Befehle aufrufbare Funktionen zur Verfügung. Wenn Applikationsprozesse über Programmierschnittstellen mit darunterliegenden Schichten kommunizieren, so können die Applikationsprozesse ohne Umcodierung bei einem Wechsel der darunterliegenden Komponenten, etwa der Hardware oder der Systemsoftware, weiter verwendet werden. Eine Programmierschnittstelle heißt normiert, wenn der Befehlssatz einheitlich festgelegt und somit unveränderlich ist. Ein Beispiel für eine derartige normierte echtzeitfähige Programmierschnittstelle ist ausführlich beschrieben in B. O. Gallmeiser, "POSIX.4: Programming for the Real World", O'Reilly & Associates, Inc., 1995. Definiert ist diese Schnittstelle in IEEE Standard 1003.1b, Institute of Electrical and Elctronics Engineers, Inc. Bei Verwendung einer Programmierschnittstelle nach diesem Standard rufen sich die Applikationsprozesse über Botschaften auf, die in Warteschlangen abgelegt und sequentiell abgearbeitet werden ("message-Queues").

## Patentansprüche

1. Verfahren zur Fehlerprüfung von echtzeitfähiger Systemsoftware (SS in Fig. 1) einer Datenverarbeitungsanlage (R), auf der Applikationsprozesse (AP1...APn) ausgeführt werden,
dadurch gekennzeichnet,
daß im Wechsel mit den Applikationsprozessen ein Prüfprozeß (PP1) ausgeführt wird, der wenigstens eine Funktion der Systemsoftware überprüft.

2. Verfahren nach Anspruch 1, bei dem der Prüfprozeß die wenigstens eine Funktion der Systemsoftware diversitär überprüft.

3. Verfahren nach Anspruch 2, bei dem die Diversität dadurch erzielt wird, daß ein identischer Prüfprozeß auf einer von der einen Datenverarbeitungsanlage (R1 in Fig. 4) sich unterscheidenden zweiten Datenverarbeitungsanlage (R2) ausgeführt wird, die eine identische Systemsoftware (SS) hat.

4. Verfahren nach Anspruch 2, bei dem die Diversität dadurch erzielt wird, daß ein Prüfprozeß (PP1 in Fig. 5) wiederholt wird, wenn die Datenverarbeitungsanlage sich in einem anderen Zustand befindet.

5. Verfahren nach Anspruch 2, bei dem die Diversität dadurch erzielt wird, daß die Datenverarbeitungsanlage zusätzlich zu dem einen Prüfprozeß (PP1 in Fig. 6) einen weiteren Prüfprozeß (PP1') ausführt, welcher die gleiche wenigstens eine Funktion der Systemsoftware wie der eine Prüfprozeß überprüft, aber divers zu dem einen Prüfprozeß programmiert ist.

6. Verfahren nach einem der vorhergehenden Ansprüche, bei dem nur solche Funktionen der Systemsoftware überprüft werden, die nicht vor einem Feldeinsatz prüfbar sind.

7. Datenverarbeitungsanlage (R in Fig. 1) mit einer echtzeitfähigen Systemsoftware (SS) zur Ausführung von Applikationsprozessen (AP1...APn),
dadurch gekennzeichnet,
daß die Datenverarbeitungsanlage Programmittel zur Ausführung eines Prüfprozesses (PP1) hat, der im Wechsel mit den Applikationsprozessen ausführbar ist und der Überprüfung wenigstens einer Funktion der Systemsoftware dient.

8. Datenverarbeitungsanlage nach Anspruch 7, die Steuermittel (PPSM in Fig. 3) hat, die den Wechsel zwischen dem Prüfprozeß und den Applikationsprozessen steuern.

9. Datenträger mit einem darauf gespeicherten Programm zur Ausführung in einer Datenverarbeitungsanlage, die eine echtzeitfähige Systemsoftware (SS) hat und auf der Applikationsprozesse (AP1...APn) ausgeführt werden,
**dadurch gekennzeichnet,**
daß das Programm einen Wechsel zwischen Applikationsprozessen und einem Prüfprozeß (PP1) steuert, welcher wenigstens eine Funktion der Systemsoftware überprüft.

10. Programmodul zur Ausführung in einer Datenverarbeitungsanlage, die eine echtzeitfähige Systemsoftware hat und auf der Applikationsprozesse ausgeführt werden,
dadurch gekennzeichnet,
daß das Programmodul Steuerbefehle umfaßt, die einen Wechsel zwischen Applikationsprozessen und einem Prüfprozeß steuern, welcher wenigstens eine Funktion der Systemsoftware überprüft.
